# EUROPÄISCHE PATENTSCHRIFT

(11) **EP 0 666 878 B1**
(45) Veröffentlichungstag und Bekanntmachung des Hinweises auf die Patenterteilung: **22.01.1997**
(21) Anmeldenummer: 93923475.3
(22) Anmeldetag: 15.10.1993
(51) Int. Cl.: C08F 283/12

(54) **NEUE POLYMERE AUF DER BASIS VON POLYARYLENSILOXANEN UND RADIKALISCH POLYMERISIERBAREN MONOMEREN**
NEW POLYMERS BASED ON POLYARYLENE SILOXANES AND RADICALLY POLYMERISABLE MONOMERS
NOUVEAUX POLYMERES A BASE DE POLYARYLSILOXANES ET DE MONOMERES POLYMERISABLES DE MANIERE RADICALAIRE

(30) Priorität: 28.10.1992 DE 4236303; 27.03.1993 DE 4310089
(43) Veröffentlichungstag der Anmeldung: 16.08.1995
(73) Patentinhaber: HOECHST AKTIENGESELLSCHAFT, 65929 Frankfurt am Main (DE)
(72) Erfinder: LAND, Horst-Tore, D-65929 Frankfurt am Main (DE); SCHUBERT, Walter, D-42349 Wuppertal (DE); KALUS, Reinhard, D-55595 St. Katharinen (DE)
(86) Internationale Anmeldenummer: EP9302854
(87) Internationale Veröffentlichungsnummer: WO9410218

(56) Entgegenhaltungen:
- EP-A- 0 398 049
- US-A- 4 871 816

## Beschreibung

Die vorliegende Erfindung betrifft Polymere auf der Basis von Polyarylensiloxanen und von radikalisch polymerisierbaren Monomeren, ein Verfahren zu ihrer Herstellung und ihre Verwendung.

Polymerisate, die mit Hilfe freie Radikale bildender Initiatoren durch Polymerisation von organischen Monomeren, die eine C-C-Doppelbindung enthalten, hergestellt werden, haben aufgrund ihrer dem jeweiligen Verwendungszweck angepaßten Eigenschaften eine überaus breite Anwendung gefunden.

Technologisch bedeutsam sind auch Polysiloxanverbindungen, wobei die aliphatischen Poly(dimethylsiloxane) die wichtigste Stoffklasse darstellen (J.J. Lebrun, H. Porte in: "Comprehensive Polymer Science", Band 5, Kap. 35: "Polysiloxane", S.593-609, Pergamon Press New York, 1989).

Eine zunehmende Bedeutung erfahren aromatische Polysiloxane, die sogenannten Polyarylensiloxane. Diese können z.B. für Release-Schichten in Photokopierern (EP-A-030 817), als Photoresistmarterialien, als flammwidrige Thermoplaste (EP-A-398 049), als Plastifizierungsmittel für Polycarbonate (DE-A-28 32 342) und als Bestandteile von Pulverlacksystemem verwendet werden (DE-A-41 29 000).

Polymere, die sowohl aus radikalisch polymerisierbaren Monomeren als auch aus aliphatischen Siloxanverbindungen hergestellt werden, können zum Imprägnieren und Beschichten von Textilien (DE-C3-26 10 372; US 4,153,640) verwendet werden.

Die Aufgabe der Erfindung bestand darin, neue Polymere auf der Basis aromatischer Polysiloxane bereitzustellen.

Diese Aufgabe wird erfindungsgemäß gelöst durch Bereitstellung von Polymeren, die durch radikalische Polymerisation von radikalisch polymerisierbaren Monomeren in Anwesenheit von in einem Lösungsmittel gelösten Polysiloxanen erhältlich sind, die dadurch gekennzeichnet sind, daß als radikalisch polymerisierbare Monomere mindestens eines der Formel I, 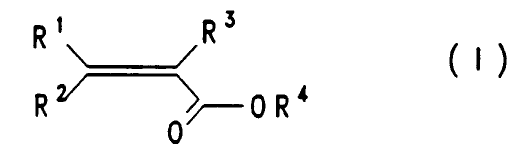 worin
- R¹ und R²: unabhängig voneinander Wasserstoff, COOH, C₁-C₁₈-Alkyl-, Cyclohexyl-, C₁-C₄-Alkyl-cyclohexyl, C₆-C₁₀-Bicycloalkyl-, C₆-C₁₈-Tricycloalkyl-,
- R³: Wasserstoff oder Methyl-,
- R⁴: Wasserstoff, (C₁-C₂₀)-Alkyl-, 2-Hydroxypropyl-, Glycidyl-,
-[CH₂CH₂-O]ₙH, mit n = 1 bis 5,
-[CH₂]ₘ-OH, mit m = 3 bis 18, insbesondere m = 3 bis 8,
-[CH₂]₂O-[CO-(CH₂)₅]ₓOH, wobei x = eine Zahl von 1 bis 3 ist, oder
-[CH₂CHOHCH₂]-O-(CO)R
R einen C₁ bis C₁₈-Alkylrest
bedeuten
und gegebenenfalls ein radikalisch polymerisierbares Monomer der Formel II 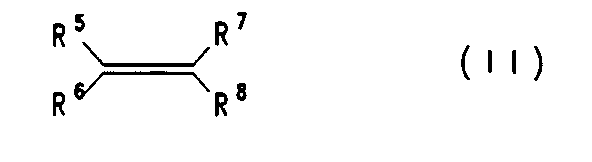 worin R⁵ ausgewählt ist aus Alkenyl (2 bis 4 C-Atome), Aryl, CHO und CH₃(CH₂)_{z}CO₂⁻
R⁶, R⁷ und R⁸ unabhängig voneinander für H, C₁-C₅-Alkyl, -COOH, -CO₂-Alkyl (mit 1 bis 4 C-Atomen) und CHO stehen, wobei die Summe der Gruppen -COOH und CO₂-Alkyl maximal zwei beträgt und
R⁵ und R⁷ zusammen eine Carbonsäureanhydrid Gruppe CO-O-CO bedeuten können
und z eine Zahl von 0 bis 5 ist,
und als Polysiloxane mindestens ein aromatisches Polyarylensiloxan der Formel III, 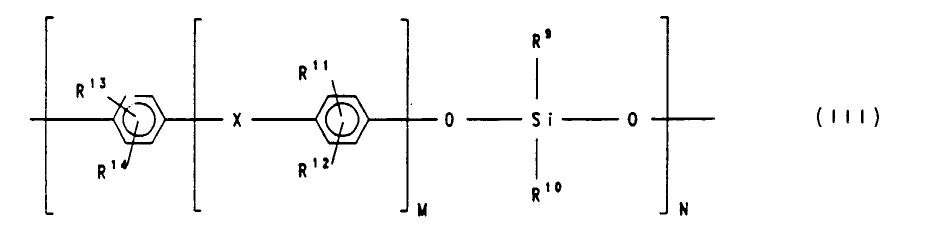 wobei R⁹- und R¹⁰- gleich oder verschieden sind und unabhängig voneinander für einen C₁-C₁₂-Alkylrest, einen C₆-C₁₄-Arylrest, oder einen gegebenenfalls substituierten Vinylrest, stehen und
R¹¹-, R¹²-, R¹³- und R¹⁴- gleich oder verschieden sind und unabhängig voneinander für Wasserstoff, einen C₁-C₃-Alkylrest oder einen substituierten oder unsubstituierten C₆-C₁₄-Arylrest stehen und
-X- für eine Gruppe -C(CH₃)₂- -C(CF₃)₂-, -S-, -SO₂-, -CH₂- oder eine Cyclohexyliden-Gruppe, welche gegebenenfalls substituiert, vorzugsweise alkylsubstituiert sein kann, oder für eine einfache chemische Bindung steht und wobei
M gleich 0 oder 1 und N eine Zahl von 2 bis 500, insbesondere von 3 bis 200, verwendet wird.

Die Alkylreste R⁹ und R¹⁰ können geradkettig oder verzweigt sein. Bevorzugt ist ein C₁-C₃-Alkylrest.

Die Arylreste R⁹ und R¹⁰ können durch C₁-C₆ Alkyreste, Halogenatome (F, Cl, Br) sowie durch Vinylgruppen substituiert sein. Bevorzugt ist ein Phenylrest.

Die Vinylreste R⁹ und R¹⁰ können durch C₆-C₁₂ Arylreste, Halogenatome (F, Cl, Br) und durch C₁-C₆ Alkyreste substituiert sein.

Die Arylreste R¹¹ bis R¹⁴ können durch C₁-C₆ Alkylgruppen, Halogenatome (F, Cl, Br) und durch Vinylgruppen substituiert sein.

Die Cyclohexylidengruppe X kann durch bis zu sechs C₁-C₆-Alkylgruppen, C₆-C₁₂-Arylgruppen und/oder durch Halogenatome (F, Cl, Br) substituiert sein.

Als Alkylreste kommen für R¹ und/oder R² insbesondere Ethylhexyl-, Octyl-, 3,5,5-Trimethylhexyl-, Decyl-, Dodecyl-, Hexyldecyl-, Octadecyl-, Lauryl-, Methyl, Ethyl, Propyl, Butyl, Isobutyl-, Tertiärbutyl-, Pentyl- und Hexyl in Frage.

Als Alkylcyclohexyl-Reste R¹ und/oder R² ist der 4-t.-Butyl-Cyclohexylrest bevorzugt. Als Bicycloalkyl- und Tricycloalkylreste R¹ und/oder R² kommen hauptsächlich Reste in Frage, die Sechsringe enthalten, z.B. der Isobornyl-Rest.

Die Arylgruppe R⁵ ist vorzugsweise eine Phenylgruppe. Sie kann durch Carboxyl, Amino, Hydroxy, C₁-C₄-Alkoxy, C₁-C₄-Alkyl, und Isocyanat substituiert sein.

Für R⁶ bis R⁸ kommen als Alkylreste besonders Methyl und Ethyl, als -CO₂-Alkyl-Reste insbesondere die Carbonsäure-methylester- und Carbonsäure-ethylester-Gruppen in Frage.

Monomere der Formel I sind beispielsweise ungesättigte Carbonsäuren, wie z.B. Acrylsäure, Methacrylsäure, Maleinsäure, Crotonsäure und deren Esterverbindungen. Bevorzugt sind Ester auf der Basis der Acrylsäure und der Methacrylsäure.

Beispiele für Monomere der Formel I mit sekundären OH-Funktionen sind 2-Hydroxypropyl(meth)acrylat und Addukte aus Glycidyl(meth)acrylat mit gesättigten kurzkettigen Fettsäuren mit C₁-C₃-Alkylresten, z.B. Essigsäure oder Propionsäure, sowie Addukte eines Glycidylesters einer tertiären Carbonsäure mit ungesättigten COOH-funktionellen Verbindungen, wie z.B. Acryl- bzw. Methacrylsäure, Maleinsäure, Crotonsäure. Beispiele für Monomere der Formel I sind ferner Addukte eines Glycidylesters einer tertiären Carbonsäure mit ungesättigten Anhydriden, wie z.B. Maleinsäureanhydrid, sowie Addukte aus Glycidyl(meth)acrylat mit Fettsäuren mit C₄-C₂₀-Alkylresten, z.B. Butansäure, Capronsäure, Laurinsäure, Palmitinsaure, Stearinsäure oder Arachidonsäure. Die Glycidylester der tertiären Carbonsäuren leiten sich beispielsweise von Pivalinsäure, von ®Versaticsäuren (Deutsche Shell) oder ®Neosäuren (Exxon) ab.

Das Handelsprodukt ®Cardura E stellt den Glycidester einer tertiäre Carbonsäure (Versaticsäure) dar. Addukte aus Glycidyl(meth)acrylat mit Fettsäuren mit C₄-C₂₀-Alkylresten lassen sich zu Lacken weiterverarbeiten, die besonders hohen Glanz aufweisen.

Bei Versaticsäuren und Neosäuren handelt es sich um tertiäre Carbonsäuren der allgemeinen Formel R' R" R"' C-COOH, wobei R', R" und R"' unabhängig voneinander C₁-C₆-Alkylreste und C₆-C₁₂-Arylreste sein können.

Addukte aus Glycidyl(meth)acrylat mit gesättigten Fettsäuren haben die allgemeine Zusammensetzung CH₂=CA-CO₂-CH₂ CHOHCH₂-OCOR,
wobei A für H oder CH₃ und R für C₁ bis C₁₈-Alkyl steht.

Beispiele für Monomere der Formel I mit primären OH-Gruppen sind Hydroxyalkylester der Acrylsäure und der Methacrylsäure mit einer primären OH-Gruppe und einem C₂-C₃-Alkylrest wie Hydroxyethyl(meth)acrylat, sowie Hydroxyalkylester der Acrylsäure und der Methacrylsäure mit einer primären OH-Gruppe und einem C₄-C₁₈-Alkylrest wie z.B. Butandiolmonoacrylat,
Hydroxyhexylacrylat, Hydroxyoctylacrylat und die entsprechenden Methacrylate und Umsetzungsprodukte von Hydroxyethyl(meth)acrylat mit Caprolacton.

Beispiele für Mononomere der Formel I, die frei von OH-Gruppen sind, sind langkettige, verzweigte oder unverzweigte ungesättigte Monomere, wie Alkyl(meth)acrylate mit C₈-C₁₈-Ketten im Alkylteil, z.B. Ethylhexyl(meth)acrylat, Octyl(meth)acrylat,
3,5,5-Trimethylhexyl(meth)acrylat, Decyl(meth)acrylat, Dodecyl(meth)acrylat, Hexydecyl(meth)acrylat, Octadecyl(meth)acrylat, Laurylacrylat, Isobornyl(meth)acrylat oder 4-Tertiärbutylcyclohexylmethacrylat. Weitere Beispiele sind kurz- und mittelkettige, verzweigte oder unverzweigte ungesättigte Monomere, wie Alkyl(meth)acrylate mit C₁-C₇-Ketten im Alkylteil, z.B. Methyl(meth)acrylat, Ethyl(meth)acrylat, Propylacrylat, Butyl(meth)acrylat, Isobutyl(meth)acrylat, Tertiärbutyl(meth)acrylat, Pentyl(meth)acrylat, Hexyl(meth)acrylat, Cyclohexyl(meth)acrylat.

Beispiele für Monomere der Formel II sind insbesondere aromatische Vinylverbindungen, wie Styrol, p-Methylstyrol und Vinylacetat.

Beispiele für Polysiloxanverbindungen der Formel III und deren Herstellung sind in der deutschen Patentanmeldung P 42 15 139.2 beschrieben.

Die Herstellung der erfindungsgemäßen Polymeren kann erfolgen, indem mindestens ein Monomer der Formel I und gegebenenfalls der Formel II sowie mindestens ein Radikalinitiator in einem Vorratsgefäß gemischt werden und indem anschließend die Mischung zu mindestens einem Polyarylensiloxan der Formel III in einem organischen Lösungsmittel unter Rühren bei erhöhter Temperatur, z.B. bei 50 bis 180°C, insbesondere bei 100 bis 150°C, zudosiert wird.

Der Anteil der Monomeren der Formel II beträgt 0 bis 50 Gew-%, insbesondere 5 bis 30 Gew-%, bezogen auf die Gesamtmasse der Momomeren der Formel I und II.

Das Gewichtsverhältnis Polyarylensiloxan / (Monomere der Formeln 1 und gegebenenfalls II) beträgt 1:99 bis 99:1, vorzugsweise 3 bis 45, besonders bevorzugt 8 bis 35.

Beispiele für Radikalinitiatoren sind Dialkylperoxide, wie Di-tert.-Butylperoxid, Dicumylperoxid; Diacylperoxide, wie Di-benzoylperoxid, Dilaurylperoxid; Hydroperoxide, wie Cumolhydroperoxid, tert.-Butylhydroperoxid; Perester, wie tert.-Butylperbenzoat, tert.-Butyl-perpivalat, tert.-Butyl-per-3,5,5-trimethylhexanoat, tert.-Butyl-per-2-ethylhexanoat; Peroxiddicarbonate, wie Di-2-ethylhexylperoxiddicarbonat, Dicyclohexylperoxiddicarbonat; Perketale, wie 1,1-Bis-(tert.-butylperoxy)3,5,5-trimethylcyclohexan, 1,1-Bis-(tert.-butylperoxy)cyclohexan; Ketonperoxide, wie Cylohexanonperoxid, Methylisobutylketonperoxid und Azo-Verbindungen, wie 2,2'-Azo-bis(2,4-dimethyl-valerontril), 2,2'-Azo-bis(2-methylbutyronitril), 1,1'-Azo-bis-cyclohexancarbontril, Azo-bis-isobutyronitril.

Die Radikalinitiatoren werden im allgemeinen in einer Menge von 0,1 bis 4 Gew.-%, bezogen auf die Monomeren-Einwaage, zugesetzt.

Als organische Lösungsmittel kommen Aromaten wie Xylol, Aliphaten und Cycloaliphaten, Ester wie Butylacetat, Ether wie Diethylether, t-Butylmethylether und Tetrahydrofuran und Ketone wie Aceton oder t-Butylmethylketon in Frage. Vorzugsweise besitzen die Polymeren Hydroxylzahlen von 60-250, insbesondere 80-180 und Säurezahlen von 5-60, insbesondere 15-40.

Die erfindungsgemäßen Polymeren können zur Hydrophobierung von technischen Fasern und Textilien oder als Komponenten für Kompositstrukturen verwendet werden. Zur Hydrophobierung kann man verfahren wie in DE-OS 2 010 372, Beispiel 3 (Ausrüstung III) beschrieben.

Die folgenden Beispiele dienen zur Erläuterung der Erfindung.

### Beispiele

Alle Teile T beziehen sich auf das Gewicht.

### Beispiel 1

In einem 4-Liter-Dreihalskolben, der mit Rührer, Tropftrichter und Rückflußkühler versehen ist, werden
- 220 T: des α,ω-hydroxyfunktionellen Polyarylensiloxans der Formel IV 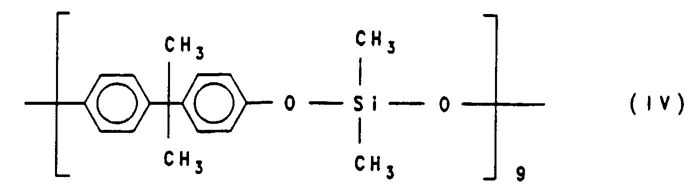 mit
- 170,5 T: Butylacetat (= BuAc)
vorgelegt und zum Sieden erhitzt. Anschließend wird ein Gemisch aus
- 5,5 T: Acrylsäure
- 67 T: Butylmethacrylat
- 97 T: Ethylhexylacrylat
- 144 T: Styrol
- 176 T: Methylmethacrylat
- 30 T: BuAc
- 620,4 T: Hydroxypropylmethacrylat
- 31,9 T: tert.-Butylperbenzoat
innerhalb von 5 Stunden kontinuierlich zudosiert. Danach werden nochmals 58,7 T BuAc und 2,9 T tert.-Butylperbenzoat zugegeben und unter Rückfluß weitere zwei Stunden gerührt. Das Gemisch wird dann mit 576,1 T BuAc auf einen Feststoffgehalt von 55,5 % eingestellt.

### Beispiel 2

In einem 4-Liter-Dreishalskolben, der mit Rührer, Tropftrichter und Rückflußkühler versehen ist, werden
- 400 T: des α,ω-hydroxyfunktionellen Polyarylensiloxans der Formel IV und 200 T BuAc auf 142°C erhitzt. Anschließend wird ein Gemisch aus
- 5 T: Acrylsäure
- 48,2 T: Butylmethacrylat
- 88,2 T: Ethylhexylacrylat
- 131 T: Styrol
- 160 T: Methylmethacrylat
- 40 T: Butylacetat
- 564 T: Hydroxypropylmethacrylat
- 29 T: tert.-Butylperbenzoat
innerhalb von 5 Stunden kontinuierlich zudosiert. Danach werden nochmals 53,4 T BuAc und 2,6 T tert.-Butylperbenzoat zugegeben und unter Rückfluß weitere zwei Stunden gerührt. Das Gemisch wird dann mit 278,6 T Butylacrylats auf einen Feststoffgehalt von 54,5 % eingestellt.

### Beispiel 3

In einem 4-Liter-Dreihalskolben, der mit Rührer, Tropftrichter und Rückflußkühler versehen ist, werden
- 62 T: des α,ω-hydroxyfunktionellen Polyarylensiloxans der Formel IV und
- 330 T: Butylacetat
vorgelegt und zum Sieden erhitzt. Anschließend wird ein Gemisch aus
- 5,4 T: Acrylsäure
- 77 T: Butylmethacrylat
- 89 T: Ethylhexylacrylat
- 155 T: Styrol
- 186 T: Methylmethacrylat
- 25 T: Butylacetat
- 610 T: Hydroxypropylmethacrylat
- 30,7 T: tert.-Butylperbenzoat

innerhalb von 5 Stunden kontinuierlich zudosiert. Danach werden nochmals 72 T BuAc und 2,8 T tert.-Butylperbenzoat zugegeben und unter Rückfluß weitere zwei Stunden gerührt. Das Gemisch wird dann mit 615 T BuAc auf einen Feststoffgehalt von 55,1 % eingestellt.

### Beispiel 4

In einem 4-Liter-Dreihalskolben, der mit Rührer, Tropftrichter und Rückflußkühler versehen ist, werden
- 712 T: des α,ω-hydroxyfunktionellen Polyarylensiloxans der Formel IV mit
- 450 T: Butylacetat
vorgelegt und auf 142°C erhitzt. Anschließend wird ein Gemisch aus
- 5,4 T: Acrylsäure
- 80 T: Butylmethacrylat
- 85 T: Ethylhexylacrylat
- 150 T: Styrol
- 51 T: Methylmethacrylat
- 45 T: Butylacetat
- 615 T: Hydroxypropylmethacrylat
- 37,6 T: Tert.-Butylperbenzoat

innerhalb von 5 Stunden kontinuierlich zudosiert. Danach werden nochmals 85 T BuAc und 3,0 T tert.-Butylperbenzoat zugegeben und unter Rückfluß weitere zwei Stunden gerührt. Das Gemisch wird dann mit 921 T BuAc auf einen Feststoffgehalt von 54,3 % eingestellt.

In Tabelle 1 sind einige Kenndaten der erfindungsgemäßen Polymeren gemäß den Beispielen 1 bis 4 angeführt.

**Tabelle 1:**

| Kenndaten der erfindungsgemäßen Polymeren gemäß den Beispielen 1 bis 4 | | | |
|---|---|---|---|
| Beispiel | Säurezahl umgerechnet auf Festharzanteil [mg KOH/g] | Viskosität [mPa·s] | Festharzanteil [%] |
| 1 | 17,1 | 615 | 55,1 |
| 2 | 16,5 | 390 | 54,5 |
| 3 | 16,4 | 980 | 55,1 |
| 4 | 18,3 | 1420 | 54,3 |
| | | | |

## Patentansprüche

1. Polymere, die durch radikalische Polymerisation von radikalisch polymerisierbaren Monomeren in Anwesenheit von in einem Lösungsmittel gelösten Polysiloxan erhältlich sind, dadurch gekennzeichnet, daß als radikalisch polymerisierbare Monomere mindestens eine Verbindung der Formel I, eingesetzt wird 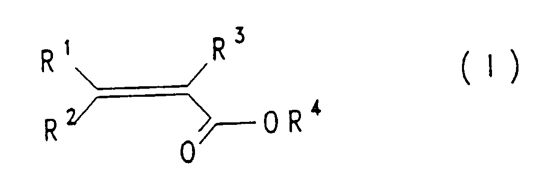 worin
R¹, R² unabhängig voneinander Wasserstoff, COOH, C₁-C₁₈-Alkyl-, Cyclohexyl-, C₁-C₄-Alkylcyclohexyl, C₆-C₁₀-Bicycloalkyl, C₆-C₁₈-Tricycloalkyl-,
R³ Wasserstoff oder Methyl-,
R⁴ Wasserstoff, (C₁-C₂₀)-Alkyl-, 2-Hydroxypropyl, Glycidyl-, -[CH₂CH₂-O]ₙH, mit n = 1 bis 5,
-[CH₂]ₘ-OH, mit m = 3 bis 18, insbesondere m = 3 bis 8,
-[CH₂]₂O-[CO-(CH₂)₅]ₓOH, wobei x = eine Zahl von 1 bis 3 ist,
oder
-[CH₂CHOHCH₂)-O-(CO)R
R einen C₁ bis C₁₈-Alkylrest
bedeuten, und als Polysiloxan mindestens ein aromatisches Polyarylensiloxan der Formel III, 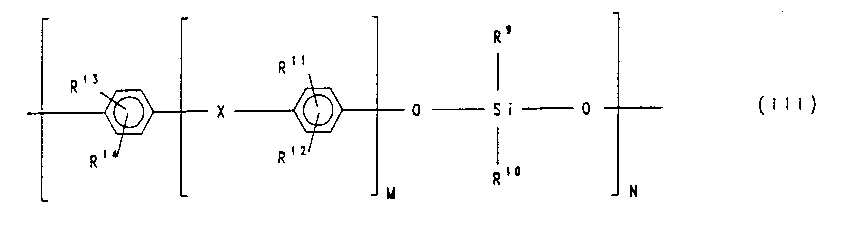 verwendet wird,
wobei R⁹- und R¹⁰- gleich oder verschieden sind und unabhängig voneinander für einen C₁-C₁₂-Alkylrest, einen C₆-C₁₄-Arylrest, oder einen gegebenenfalls substituierten Vinylrest, stehen und R¹¹-, R¹²-, R¹³- und R¹⁴-gleich oder verschieden sind und unabhängig voneinander für Wasserstoff, einen C₁-C₃-Alkylrest oder einen substituierten oder unsubstituierten C₆-C₁₄-Arylrest stehen und -X- für eine Gruppe -C(CH₃)₂-, -C(CF₃)₂-, -S-, -SO₂-, -CH₂- oder eine Cyclohexyliden-Gruppe, welche gegebenenfalls substituiert, vorzugsweise alkylsubstituiert sein kann, oder für eine chemische Bindung steht und M gleich 0 oder 1 und N eine Zahl von 2 bis 500, insbesondere 3 bis 200 ist.

2. Polymere nach Anspruch 1, dadurch gekennzeichnet, daß ein weiteres radikalisch polymerisierbares Monomer der Formel II eingesetzt wird 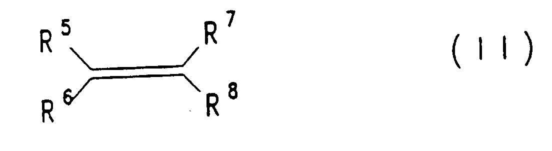 worin
R⁵, ausgewählt ist aus Alkenyl (2 bis 4 C-Atomen), Aryl, CHO und CH₃(CH₂)_{z}CO₂-
R⁶, R⁷ und R⁸ unabhängig voneinander für H, C₁-C₅-Alkyl, COOH, -CO₂-Alkyl (mit 1 bis 4 C-Atomen) und CHO stehen, wobei die Summe der Gruppen, -COOH und CO₂-Alkyl maximal zwei beträgt und
R⁵ und R⁷ zusammen eine Carbonsäure-Anhydrid-Gruppe -CO-O-CO-bedeuten können,
und z eine Zahl von 0 bis 5 ist.

3. Polymere nach Anspruch 2, dadurch gekennzeichnet, daß als radikalisch polymerisierbares Monomer der Formel II in der R⁵ für Aryl steht, eingesetzt wird.

4. Polymere nach Anspruch 1, dadurch gekennzeichnet, daß aromatische Polysiloxane der Formel IV 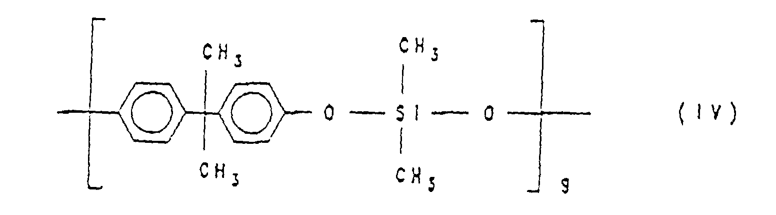 verwendet werden.

5. Verfahren zur Herstellung von Polymeren nach Anspruch 1 oder 2, dadurch gekennzeichnet, daß mindestens ein Monomer der Formel I und gegebenenfalls der Formel II sowie mindestens ein Radikalinitiator in einem Vorratsgefäß gemischt werden, anschließend die Mischung zu mindestens einem Polyarylensiloxan der Formel III in einem organischen Lösungsmittel unter Rühren bei erhöhter Temperatur, bei 50 bis 180°C, insbesondere bei 120 bis 150°C, zudosiert wird.

6. Verfahren nach Anspruch 5, dadurch gekennzeichnet, daß 0 bis 50 Gew-%, insbesondere 5 bis 30 Gew-% Monomere der Formel II, bezogen auf die Gesamtmasse der Monomeren I und II, eingesetzt werden.

7. Verfahren nach Anspruch 5, dadurch gekennzeichnet, daß man ein Gewichtsverhältnis Polyarylensiloxan / (Monomere der Formeln I und II) von 1:99 bis 99:1, vorzugsweise 3 bis 45, besonders bevorzugt 8 bis 35 einhält.

8. Lösung eines Polymers gemäß Anspruch 1 in einem organischen Lösemittel, das ausgewählt ist aus der Gruppe der Alkylbenzole, Cycloaliphaten, Alkancarbonsäurealkylester, Dialkylether, Dialkylketone und Tetrahydrofuran.

## Claims

1. A polymer which can be obtained by free-radical polymerization of free-radical-polymerizable monomers in the presence of a polysiloxane dissolved in a solvent, wherein the free-radical-polymerizable monomers used are at least one compound of the formula I, 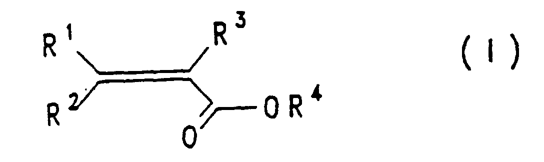 where
R¹ and R² are, independently of one another, hydrogen, COOH, C₁-C₁₈-alkyl, cyclohexyl, C₁-C₄-alkylcyclohexyl, C₆-C₁₀-bicycloalkyl, C₆-C₁₈-tricycloalkyl,
R³ is hydrogen or methyl,
R⁴ is hydrogen, (C₁-C₂₀)-alkyl, 2-hydroxypropyl, glycidyl,
-[CH₂CH₂-O]ₙH, having n = 1 to 5,
-[CH₂]ₘ-OH, having m = 3 to 18, in particular m = 3 to 8,
-[CH₂]₂O-[CO-(CH₂)₅]ₓOH, where x = a number from 1 to 3,
or
-[CH₂,CHOHCH₂]-O-(CO)R,
where R is a C₁ to C₁₈-alkyl radical, and the polysiloxane used is at least one aromatic polyarylene siloxane of the formula III, 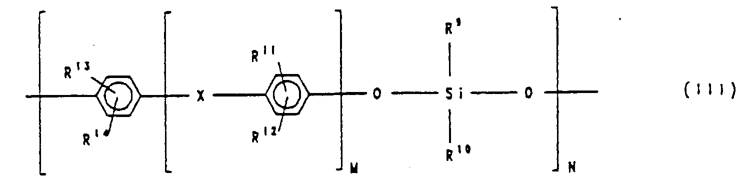 where R⁹ and R¹⁰ are identical or different and are, independently of one another, a C₁-C₁₂-alkyl radical, a C₆-C₁₄-aryl radical, or an unsubstituted or substituted vinyl radical, and R¹¹, R¹², R¹³ and R¹⁴ are identical or different and are, independently of one another, hydrogen, a C₁-C₃-alkyl radical or a substituted or unsubstituted C₆-C₁₄-aryl radical and -X- is a group -C(CH₃)₂-, -C(CF₃)₂-, -S-, -SO₂-, -CH₂- or a cyclohexylidene group which can be unsubstituted or substituted, preferably alkyl-substituted, or is a chemical bond and M is equal to 0 or 1 and N is a number from 2 to 500, in particular from 3 to 200.

2. A polymer as claimed in claim 1, wherein use is made of a further free-radical-polymerizable monomer of the formula II 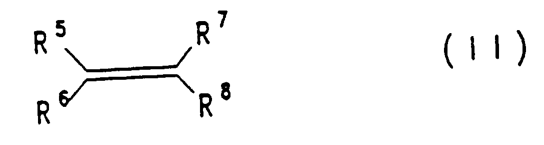 where
R⁵ is selected from among alkenyl (2 to 4 carbon atoms), aryl, CHO and CH₃(CH₂)_{z}CO₂-,
R⁶, R⁷ and R⁸ are, independently of one another, H, C₁-C₅-alkyl, -COOH, -CO₂-alkyl (having from 1 to 4 carbon atoms) and CHO, where the sum of the groups -COOH and CO₂-alkyl is at most two and
R⁵ and R⁷ can together be a carboxylic acid anhydride group -CO-O-CO-,
and z is a number from 0 to 5.

3. A polymer as claimed in claim 2, wherein the free-radical-polymerizable monomer of the formula II is one where R⁵ is aryl.

4. A polymer as claimed in claim 1, wherein use is made of aromatic polysiloxanes of the formula IV

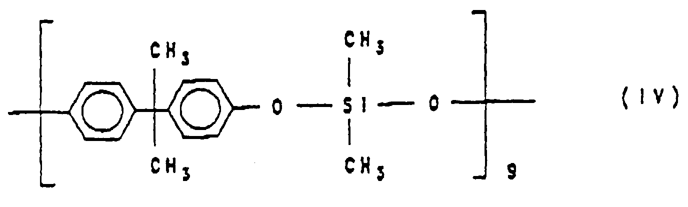

5. A process for preparing a polymer as claimed in claim 1 or 2, which comprises mixing at least one monomer of the formula I and, if desired, of the formula II and also at least one free-radical initiator in a reservoir, and subsequently metering the mixture into at least one polyarylene siloxane of the formula III in an organic solvent while stirring at elevated temperature, at from 50 to 180°C, in particular at from 120 to 150°C.

6. The process as claimed in claim 5, wherein from 0 to 50 % by weight, in particular from 5 to 30 % by weight, of monomers of the formula II, based on the total mass of the monomers I and II, are used.

7. The process as claimed in claim 5, wherein a weight ratio of polyarylene siloxane/(monomers of the formulae I and II) of from 1:99 to 99:1, preferably from 3 to 45, particularly preferably from 8 to 35, is maintained.

8. A solution of a polymer as claimed in claim 1 in an organic solvent selected from the group consisting of alkylbenzenes, cycloaliphatics, alkyl alkane-carboxylates, dialkyl ethers, dialkyl ketones and tetrahydrofuran.

## Revendications

1. Polymères que l'on peut obtenir par polymérisation radicalaire des monomères polymérisables par voie radicalaire en présence d'un polysiloxane dissout dans un solvant, caractériséd en ce que en tant que monomères polymérisables par voie radicalaire on utilise au moins un composé de formule I 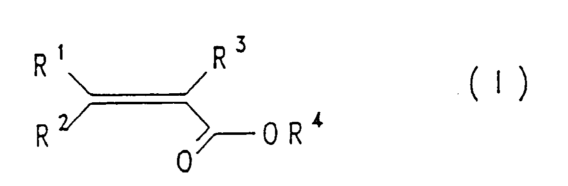 où
R¹ et R², indépendamment l'un de l'autre, représentent l'hydrogène, COOH, radical alkyle en C₁-C₁₈, cyclohexyle, (alkyle en C₁-C₄)-cyclohexyle, bicycloalkyle en C₆-C₁₀, tricycloalkyle en C₆-C₁₈,
R³ représente l'hydrogène ou le radical méthyle,
R⁴ représente l'hydrogène, le radical alkyle en C₁-C₂₀, 2-hydroxypropyle, glycidyle,
-[CH₂CH₂-O]ₙH, avec n = 1 à 5,
-[CH₂]ₘ-OH, avec m = 3 à 18, plus particulièrement m = 3 à 8,
-[CH₂]₂O-[CO-(CH₂)₅]ₓOH, x = un nombre de 1 à 3, ou -[CH₂CHOHCH₂]-O-(CO)-R
R représente un radical alkyle en C₁ à C₁₈,
et en tant que polysiloxane au moins un composé aromatique polyarylènesiloxane de formule III 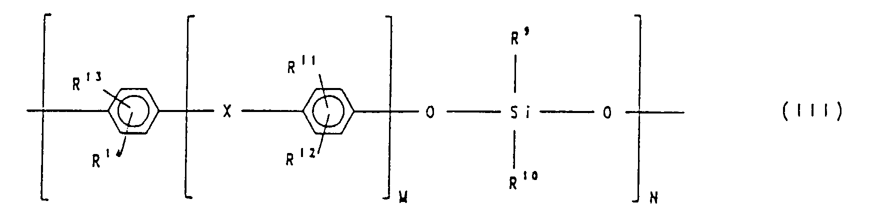
R⁹ et R¹⁰ étant identiques ou différents, indépendamment l'un de l'autre, représentent un radical alkyle en C₁-C₁₂, un radical aryle en C₆-C₁₄ ou un radical vinyle éventuellement substitué et
R¹¹, R¹², R¹³ et R¹⁴, étant identiques ou différents, et indépendamment l'un de l'autre représentent l'hydrogène, un radical alkyle en C₁-C₃ ou un radical aryle en C₆-C₁₄ substitué ou non substitué et
-X- représente un groupe -C(CH₃)₂-, -C(CF₃)₂-, -S-, -SO₂-, -CH₂- ou un groupe cyclohexylidène qui peut être éventuellement substitué, de préférence substitué par alkyle, ou une liaison chimique simple et
M valant 0 ou 1 et N un nombre de 2 à 500, plus particulièrement de 3 à 200.

2. Polymères selon la revendication 1, caractérisés en ce qu'on utilise un autre monomère polymérisable par voie radicalaire de formule II 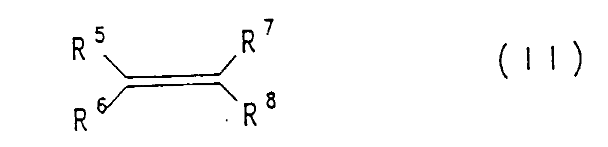 où
R⁵ est pris dans le groupe comportant alcényle (2 à 4 atomes de carbone), aryle, CHO et CH₃(CH₂)_{z}CO₂-,
R⁶, R⁷ et R⁸ indépendamment l'un de l'autre représente H, alkyle en C₁-C₅, -COOH, -CO₂-alkyle (avec 1 à 4 atomes de carbone) et CHO, la somme des groupes -COOH et - CO₂-alkyle étant 2 au maximum et
R⁵ et R⁷ ensemble pouvant représenter un groupe anhydride d'acide carboxylique CO-O-CO
et z représente un nombre de 0 à 5,

3. Polymères selon la revendication 2, caractérisés en ce qu'on utilise en tant que monomère polymérisable par voie radicalaire de formule II un tel dans lequel R⁵ représente aryle.

4. Polymères selon la revendication 1, caractérisés en ce qu'on utilise des polysiloxanes aromatiques de formule IV

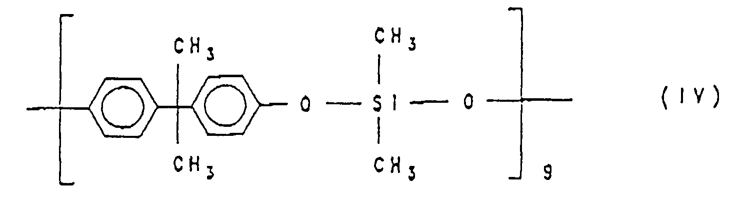

5. Procédé pour la préparation de polymères selon la revendication 1 ou 2, caractérisé en ce qu'on mélange au moins un monomère de formule I et éventuellement de formule II ainsi qu'au moins un amorceur radicalaire dans un réservoir, ensuite on ajoute progressivement le mélange à au moins un polyarylènesiloxane de formule III dans un solvant organique, en agitant, à température élevée de 50 à 180°C, plus particulièrement de 120 à 150°C.

6. Procédé selon la revendication 5, caractérisé en ce qu'on utilise de 0 à 50% en poids, plus particulièrement de 5 à 30% en poids de monomères de formule II, par rapport à la masse totale des monomères I et II.

7. Procédé selon la revendication 5, caractérisé en ce qu'on maintient un rapport pondéral de polyarylène-siloxane/(monomères de formules I et II) de 1:99 à 99:1, de préférence de 3 à 45, de manière particulièrement préférée de 8 à 35.

8. Solution d'un polymère selon la revendication 1, dans un solvant organique que l'on prend dans le groupe comportant des alkylbenzènes, des cycloaliphatiques, des esters d'alkyles d'acides alcanecarboxyliques, l'éther dialkylique, les cétones dialkyliques et le tétrahydrofuranne.
